(19) Europäisches Patentamt
European Patent Office
Office européen des brevets

(11) Publication number: **0 306 222 A2**

(12) # EUROPEAN PATENT APPLICATION

(21) Application number: 88307894.1

(22) Date of filing: 25.08.88

(51) Int. Cl.4: C07C 149/425, C07C 147/12, C07C 147/14, A01N 41/06, A01N 41/10

(30) Priority: 01.09.87 JP 216511/87
10.08.88 JP 198038/88

(43) Date of publication of application:
08.03.89 Bulletin 89/10

(84) Designated Contracting States:
DE FR GB IT

(71) Applicant: HOKKO CHEMICAL INDUSTRY CO., LTD
4-20, 4-chome, Nihonbashi-Hongoku-cho
Chuo-ku
Tokyo(JP)

(72) Inventor: Ohyama,Hiroshi
B-22-19, 36-20, Tsutsumi
Chigasaki-shi Kanagawa-ken(JP)
Inventor: Shiro, Niitsuma
c/o Hokko Kagaku-Ryo, 2385, Toda
Atsugi-shi Kanagawa-ken(JP)
Inventor: Shimozono, Takuro
c/o Hokko Kagaku-Ryo, 2385, Toda
Atsugi-shi Kanagawa-ken(JP)
Inventor: Kido, Tsunehiro
1-1, 1-chome, Tsukushino
Machida-shi Tokyo(JP)
Inventor: Shibata, Toshihiro
c/o Hokko Kagaku-Ryo, 2385, Toda
Atsugi-shi Kanagawa-ken(JP)
Inventor: Wada, Takuo
684-11, Soya
Hadano-shi Kanagawa-ken(JP)

(74) Representative: Cresswell, Thomas Anthony et al
J.A. Kemp & Co. 14 South Square Gray's Inn
London WC1R 5EU(GB)

(54) **Benzenesulfonanilide derivatives and fungicides for agriculture and horticulture.**

(57) A benzenesulfonailide derivative of formula (I) is disclosed wherein R represents $(C_1-C_6)$-alkyl, $(C_2-C_6)$-alkenyl, $(C_2-C_6)$-alkynyl, $(C_1-C_6)$-haloalkyl, $(C_1-C_6)$-alkoxy-$(C_1-C_6)$-alkyl, $(C_1-C_6)$-alkoxycarbonyl-$(C_1-C_6)$-alkyl, ($C_3-C_6$)-cycloalkyl, $(C_3-C_6)$-cycloalkyl-$(C_1-C_6)$-alkyl, phenyl or phenyl-$(C_1-C_6)$-alkyl, n is 0, 1 or 2, X represents hydrogen or halogen and Y represents hydrogen, halogen, nitro, $(C_1-C_6)$-alkylthio, $(C_1-C_6)$-alkylsulfinyl or $(C_1-C_6)$-alkylsulfonyl. Also disclosed is a fungicide for agriculture and horticulture containing as its active ingredient the derivative of formula (I).

EP 0 306 222 A2

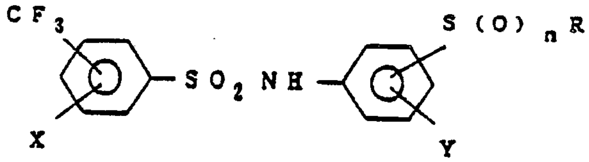

(I)

This invention relates to new benzenesulfonanilide derivatives and more particularly to benzenesulfonanilide derivatives of the below-mentioned formula (I) wherein the benzene ring of the sulfonic acid has a trifluoromethyl group and the benzene ring of the aniline has a substituted-thio, -sulfinyl, or -sulfonyl group, and new fungicides for agriculture and horticulture comprising said derivatives as active ingredients. The invention is useful in the field of chemical industry and agriculture, in particular the manufacture of agricultural chemicals.

The sulfonanilide derivatives have been synthesized from of old in a large number of compounds and the physiological activities for agricultural chemicals have been studied. Of the benzenesulfonanilide derivatives having a trifluoromethyl group at the 3-position of the benzene ring, those having a fungicidal activity are disclosed in Japanese Patents 61-197553 A, 61-200959 A, 61-205247 A and 61-271270 A.

Japanese Patent 61-197553 A discloses a compound of the formula

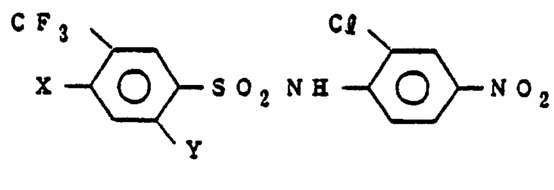

wherein X and Y independently represent hydrogen or chlorine. Japanese Patent 61-200959 A discloses N-(2-chloro-4-trifluoromethylphenyl)-3-trifluoromethylbenzenesulfonamide. Japanese Patent 61-205247 A discloses a compound of the formula

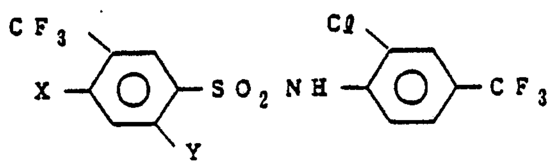

wherein X and Y independently represent hydrogen or chlorine. Japanese Patent 61-271270 A discloses a compound of the formula

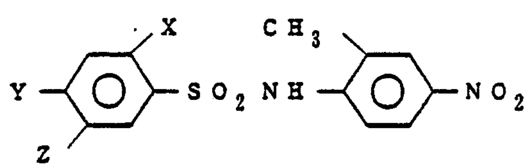

wherein X and Y independently represent hydrogen, chlorine or methyl, and Z is hydrogen, chlorine, cyano or trifluoromethyl.

The above patent publications describe that the above-identified compounds exhibit an activity to soil diseases centering on clubroot of Cruciferae vegetables.

There is no reference to the compounds having at least one substituted-thio, -sulfinyl or -sulfonyl group on the benzene ring of the aniline, such as those of the present invention.

Thus, the benzenesulfonanilide derivatives of the invention are new compounds and the fungicidal activity of said derivatives are not known.

Known 3-trifluoromethylbenzenesulfonanilide derivatives exhibit an activity for soil fungicide as shown in the below-mentioned test examples, but may have considerably limited application in a practical use because of their phytotoxicity to crops. No description on the fungicidal activities of said known derivatives to other disease injuries than soil disease is given in the above cited publications. Any known compounds have poor fungicidal activity as shown in the below-mentioned test example, leading to poor practical use.

An object of the invention is to provide new benzenesulfonanilide derivatives which have high activity to clubroot of Cruciferae vegetables which is very interesting soil disease; rice blast; powdery mildew, rust, downy mildew and so forth of vegetables, fruit trees and cereals, and which do not have phytotoxicity and are of high safety, as well as fungicides for agriculture and horticulture.

To attain the above-mentioned object, we have synthesized a large number of benzenesulfonanilide derivatives and studied their usefulness. As a result, we were successful in the synthesis of the benzenesulfonanilide derivatives of the below-mentioned formula (I) wherein the benzene ring of the sulfonic acid has a trifluoromethyl group and the benzene ring of the aniline has a subsituted-thio, -sulfinyl, or - sulfonyl group. We also have found that these derivatives are new compounds not disclosed in any literature and furthermore they have higher fungicidal activity and safety than known analogous compounds.

Thus, the invention provides a benzenesulfonanilide derivative of formula (I)

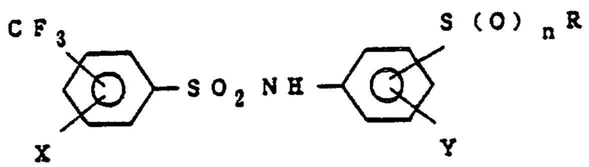

(I)

wherein R represents ($C_1$-$C_6$)-alkyl, ($C_2$-$C_6$)-alkenyl, ($C_2$-$C_6$)-alkynyl, ($C_1$-$C_6$-)-haloalkyl, ($C_1$-$C_6$)-alkoxy-($C_1$-$C_6$)-alkyl, ($C_1$-$C_6$)-alkoxycarbonyl-($C_1$-$C_6$)-alkyl, ($C_3$-$C_6$)-cycloalkyl, ($C_3$-$C_6$)-cycloalkyl-($C_1$-$C_6$)-alkyl, phenyl or phenyl-($C_1$-$C_6$)-alkyl, n is 0, 1 or 2, X represents hydrogen or halogen and Y represents hydrogen, halogen, nitro, ($C_1$-$C_6$)-alkylthio, ($C_1$-$C_6$)-alkylsulfinyl or ($C_1$-$C_6$)-alkylsulfonyl.

A further aspect of the invention includes a fungicide comprising the benzenesulfonanilide derivative of formula (I) as an active ingredient.

In the definition of formula (I), examples of ($C_1$-$C_6$)-alkyl include methyl, ethyl, n-propyl, i-propyl, n-butyl, i-butyl, sec-butyl, tert-butyl, n-pentyl, i-pentyl, n-hexyl, i-hexyl, etc.; examples of ($C_2$-$C_6$)-alkenyl include vinyl, allyl, 1-propenyl, isopropenyl, 1(2 or 3)-butenyl, 1(2, 3 or 4)-pentenyl, 1(2, 3, 4 or 5)-hexenyl, etc.; examples of ($C_2$-$C_6$)-alkynyl include ethynyl, 2-propynyl, 1-butyne-3-yl, 2-butynyl, etc.; examples of ($C_1$-$C_6$)-haloalkyl include chloromethyl, chloroethyl, chloropropyl, chlorobutyl, chloropentyl, chlorohexyl or those substituted with fluorine, bromine or iodine instead of chlorine in the above-listed groups; examples of ($C_1$-$C_6$)-alkoxy-($C_1$-$C_6$)-alkyl include methoxymethyl, ethoxyethyl, propoxymethyl, butoxymethyl, methoxyethyl, ethoxyethyl, propoxyethyl, etc.; examples of ($C_1$-$C_6$)-alkoxycarbonyl-($C_1$-$C_6$)-alkyl include methoxycarbonylmethyl, ethoxycarbonylmethyl, propoxycarbonylmethyl, butoxycarbonylmethyl, methoxycarbonylethyl, ethoxycarbonylethyl, etc.; examples of ($C_3$-$C_6$)-cycloalkyl include cyclopropyl, cyclopentyl, cyclohexyl, etc.; examples of ($C_3$-$C_6$)-cycloalkyl-($C_1$-$C_6$)-alkyl include cyclopropylmethyl, cyclopentylmethyl, cyclohexylmethyl, cyclopropylethyl, cyclopentylethyl, etc.; examples of phenyl-($C_1$-$C_6$)-alkyl include benzyl, phenylethyl, phenylpropyl, phenylbutyl, etc.; examples of ($C_1$-$C_6$)-alkylthio include methylthio, ethylthio, propylthio, butylthio, pentylthio, hexylthio, etc.; examples of ($C_1$-$C_6$)-alkylsulfinyl include methylsulfinyl, ethylsulfinyl, propylsulfinyl, butylsulfinyl, pentylsulfinyl, hexylsulfinyl, etc.; and examples of ($C_1$-$C_6$)-alkylsulfonyl include methylsulfonyl ethylsulfonyl, propylsulfonyl, butylsulfonyl, pentylsulfonyl, hexylsufonyl, etc.

Representative examples of the compounds of formula (I) are shown in Table 1.

Table 1

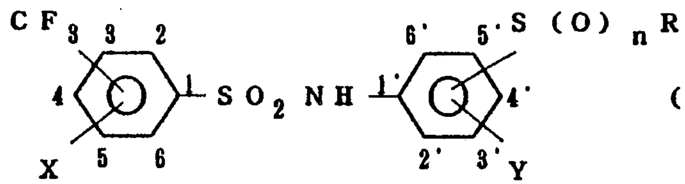

(I)

| Compd. No. | RS(O)n | Position of $CF_3$ | X | Y | Physical property [refractive index $n_D$ or m.p. (°C)] |
|---|---|---|---|---|---|
| 1 | 2'-$CH_3S$ | 3 | H | H | mp 82-83℃ |
| 2 | 2'-$CH_3SO$ | 3 | H | H | mp 127.5-128.5℃ |
| 3 | 2'-$CH_3SO_2$ | 3 | H | H | mp 116-117.5℃ |
| 4 | 2'-$C_2H_5S$ | 3 | H | H | $n_D^{23}$=1.5532 |
| 5 | 2'-$C_2H_5SO_2$ | 3 | H | H | mp 84-86.5℃ |
| 6 | 2'-n-$C_3H_7S$ | 3 | H | H | $n_D^{23}$=1.5481 |
| 7 | 2'-n-$C_3H_7SO_2$ | 3 | H | H | mp 75-78℃ |
| 8 | 4'-$CH_3S$ | 3 | H | H | mp 90.5-92℃ |
| 9 | 4'-$CH_3SO_2$ | 3 | H | H | mp 180.5-182℃ |
| 10 | 2'-$CH_3S$ | 2 | H | H | mp 101.5-103℃ |
| 11 | 2'-$CH_3SO$ | 2 | H | H | mp 127-129℃ |
| 12 | 2'-$CH_3SO_2$ | 2 | H | H | mp 136-137℃ |
| 13 | 2'-$CH_3S$ | 4 | H | H | mp 123-125℃ |
| 14 | 2'-$CH_3SO$ | 4 | H | H | mp 155-156℃ |
| 15 | 2'-$CH_3SO_2$ | 4 | H | H | mp 111-113℃ |

Table 1 (Cont'd)

| Compd. No. | RS(O)n | Position of $CF_3$ | X | Y | Physical property [refractive index $n_D$ or m.p. (°C)] |
|---|---|---|---|---|---|
| 16 | 2'-$CH_3S$ | 5 | 2-Cl | H | mp 115-117℃ |
| 17 | 2'-$CH_3SO$ | 5 | 2-Cl | H | mp 148-151℃ |
| 18 | 2'-$CH_3SO_2$ | 5 | 2-Cl | H | mp 138-140℃ |
| 19 | 2'-$CH_3S$ | 5 | 3-Cl | H | $n_D^{23}$ = 1.5476 |
| 20 | 2'-$CH_3SO$ | 5 | 3-Cl | H | $n_D^{23}$ = 1.5488 |
| 21 | 2'-$CH_3SO_2$ | 5 | 3-Cl | H | $n_D^{23}$ = 1.5469 |
| 22 | 2'-$CH_3S$ | 3 | H | 4'-Cl | mp 83-86℃ |
| 23 | 2'-$CH_3SO$ | 3 | H | 4'-Cl | $n_D^{23}$ = 1.5490 |
| 24 | 2'-$CH_3SO_2$ | 3 | H | 4'-Cl | mp 144-147℃ |
| 25 | 2'-$CH_3SO$ | 3 | H | 4'-$NO_2$ | mp 148-151℃ |
| 26 | 2'-$CH_3SO_2$ | 3 | H | 4'-$NO_2$ | mp 110℃(decomp.) |
| 27 | 2'-$CH_3S$ | 3 | H | 4'-$CH_3S$ | mp 98-100 ℃ |
| 28 | 2'-$CH_3SO$ | 3 | H | 4'-$CH_3SO$ | mp 150-152℃ |
| 29 | 2'-$CH_3SO_2$ | 3 | H | 4'-$CH_3SO_2$ | mp 162-163.5℃ |
| 30 | 2'-i-$C_3H_7S$ | 3 | H | H | $n_D^{23}$ = 1.5490 |
| 31 | 2'-i-$C_3H_7SO_2$ | 3 | H | H | mp 92-94℃ |
| 32 | 2'-n-$C_4H_9S$ | 3 | H | H | $n_D^{23}$ = 1.5378 |
| 33 | 2'-n-$C_4H_9SO_2$ | 3 | H | H | $n_D^{23}$ = 1.5350 |
| 34 | 2'-i-$C_4H_9S$ | 3 | H | H | $n_D^{23}$ = 1.5120 |

Table 1 (Cont'd)

| Compd. No. | RS(O)n | Position of $CF_3$ | X | Y | Physical property [refractive index $n_D$ or m.p. (°C)] |
|---|---|---|---|---|---|
| 35 | 2'-i-$C_4H_9SO_2$ | 3 | H | H | $n_D^{23}$=1.5370 |
| 36 | 2'-s-$C_4H_9S$ | 3 | H | H | $n_D^{23}$=1.5445 |
| 37 | 2'-s-$C_4H_9SO_2$ | 3 | H | H | $n_D^{23}$=1.5425 |
| 38 | 2'-t-$C_4H_9S$ | 3 | H | H | $n_D^{23}$=1.5172 |
| 39 | 2'-t-$C_4H_9SO_2$ | 3 | H | H | mp 116-118℃ |
| 40 | 2'-n-$C_5H_{11}S$ | 3 | H | H | $n_D^{23}$=1.5215 |
| 41 | 2'-n-$C_5H_{11}SO_2$ | 3 | H | H | $n_D^{23}$=1.5288 |
| 42 | 2'-i-$C_5H_{11}S$ | 3 | H | H | $n_D^{23}$=1.5386 |
| 43 | 2'-i-$C_5H_{11}SO_2$ | 3 | H | H | mp 73-75℃ |
| 44 | 2'-n-$C_6H_{13}S$ | 3 | H | H | $n_D^{23}$=1.5273 |
| 45 | 2'-n-$C_6H_{13}SO_2$ | 3 | H | H | $n_D^{23}$=1.5308 |
| 46 | 2'-$CH_2$=$CHCH_2S$ | 3 | H | H | $n_D^{23}$=1.5610 |
| 47 | 2'-$CH_2$=$CHCH_2SO_2$ | 3 | H | H | mp 80-82℃ |
| 48 | 2'-$CH\equiv CCH_2S$ | 3 | H | H | $n_D^{23}$=1.5665 |
| 49 | 2'-$CH\equiv CCH_2SO_2$ | 3 | H | H | $n_D^{23}$=1.5538 |
| 50 | 2'-$C\ell CH_2CH_2CH_2S$ | 3 | H | H | $n_D^{23}$=1.5436 |
| 51 | 2'-$C\ell CH_2CH_2CH_2SO_2$ | 3 | H | H | $n_D^{23}$=1.5381 |
| 52 | 2'-$CH_3OCH_2CH_2S$ | 3 | H | H | $n_D^{23}$=1.5393 |
| 53 | 2'-$CH_3OCH_2CH_2SO_2$ | 3 | H | H | $n_D^{23}$=1.5362 |

Table 1 (Cont'd)

| Compd. No. | RS(O)n | Position of $CF_3$ | X | Y | Physical property [refractive index $n_D$ or m.p. (°C)] |
|---|---|---|---|---|---|
| 54 | 2'-$C_2H_5OCOCH_2S$ | 3 | H | H | $n_D^{23}$=1.5451 |
| 55 | 2'-$C_2H_5OCOCH_2SO_2$ | 3 | H | H | $n_D^{23}$=1.5430 |
| 56 | 2'-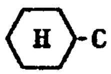-$CH_2$·S | 3 | H | H | $n_D^{23}$=1.5510 |
| 57 | 2'-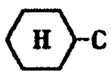-$CH_2SO_2$ | 3 | H | H | $n_D^{23}$=1.5493 |
| 58 | 2'-$CH_3S$ | 3 | 4-Cl | H | mp 90-92°C |
| 59 | 2'-$CH_3SO$ | 3 | 4-Cl | H | mp 182-184°C |
| 60 | 2'-$CH_3SO_2$ | 3 | 4-Cl | H | mp 160-162°C |
| 61 | 2'-$C_2H_5S$ | 3 | 4-Cl | H | $n_D^{23}$=1.5360 |
| 62 | 2'-$C_2H_5SO_2$ | 3 | 4-Cl | H | mp 79-81°C |
| 63 | 2'-n-$C_3H_7S$ | 3 | 4-Cl | H | $n_D^{23}$=1.5415 |
| 64 | 2'-n-$C_3H_7SO$ | 3 | 4-Cl | H | mp 92-94°C |
| 65 | 2'-n-$C_3H_7SO_2$ | 3 | 4-Cl | H | mp 69-71°C |
| 66 | 2'-i-$C_3H_7S$ | 3 | 4-Cl | H | $n_D^{23}$=1.5518 |
| 67 | 2'-i-$C_3H_7SO_2$ | 3 | 4-Cl | H | mp 138-140°C |
| 68 | 2'-n-$C_4H_9S$ | 3 | 4-Cl | H | $n_D^{23}$=1.5335 |
| 69 | 2'-n-$C_4H_9SO_2$ | 3 | 4-Cl | H | $n_D^{23}$=1.5484 |
| 70 | 2'-i-$C_4H_9S$ | 3 | 4-Cl | H | mp 76-78°C |
| 71 | 2'-i-$C_4H_9SO_2$ | 3 | 4-Cl | H | mp 60-62°C |

Table 1 (Cont'd)

| Compd. No. | RS(O)n | Position of $CF_3$ | X | Y | Physical property [refractive index $n_D$ or m.p. (°C)] |
|---|---|---|---|---|---|
| 72 | 2′-s-$C_4H_9S$ | 3 | 4-Cℓ | H | $n_D^{23}$ = 1.5434 |
| 73 | 2′-s-$C_4H_9SO_2$ | 3 | 4-Cℓ | H | mp 75-77°C |
| 74 | 2′-n-$C_5H_{11}S$ | 3 | 4-Cℓ | H | $n_D^{23}$ = 1.5526 |
| 75 | 2′-n-$C_5H_{11}SO_2$ | 3 | 4-Cℓ | H | mp 93-95°C |
| 76 | 2′-n-$C_6H_{13}S$ | 3 | 4-Cℓ | H | $n_D^{23}$ = 1.5422 |
| 77 | 2′-n-$C_6H_{13}SO_2$ | 3 | 4-Cℓ | H | mp 83-85°C |
| 78 | 2′– 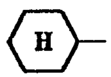 –S | 3 | 4-Cℓ | H | $n_D^{23}$ = 1.5161 |
| 79 | 2′– 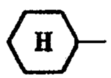 –$SO_2$ | 3 | 4-Cℓ | H | $n_D^{23}$ = 1.5360 |
| 80 | 2′– 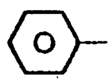 –S | 3 | 4-Cℓ | H | $n_D^{23}$ = 1.5614 |
| 81 | 2′– 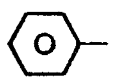 –$SO_2$ | 3 | 4-Cℓ | H | mp 93-95°C |
| 82 | 2′– 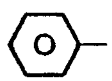 –$CH_2S$ | 3 | 4-Cℓ | H | mp 113-115°C |
| 83 | 2′– 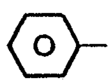 –$CH_2SO_2$ | 3 | 4-Cℓ | H | mp 100-102°C |

All of the compounds shown in Table 1 have low toxicity and $LD_{50}$ of 500 mg/kg or more in an oral administration to mouse, and fish-toxicity of 2 ppm or more in TLM 46 hr against carp.

The compound No. shown in Table 1 will be referred to in the below-mentioned examples and test examples.

The compound of formula (I) can be prepared by the following methods (a) and (b).

Method (a)

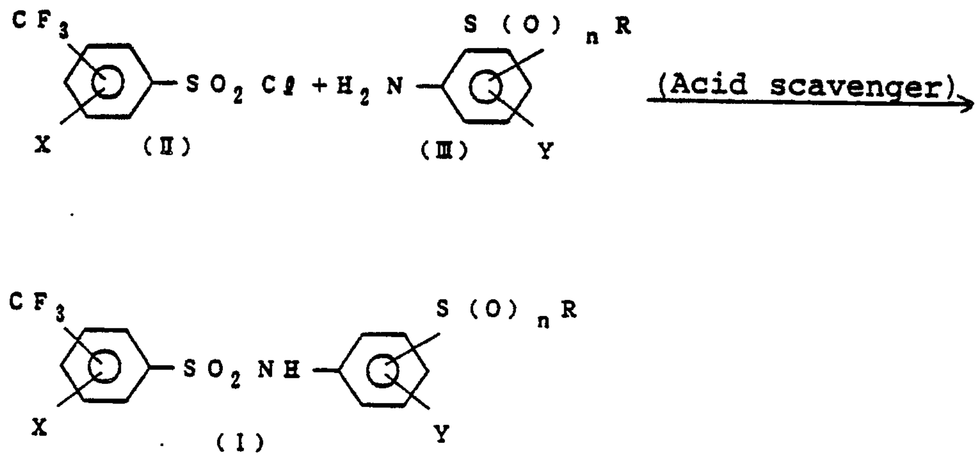


(II) (III) (I)

In the above formulae, R, n, X and Y have the same meanings as defined above.

The preparation in this method is carried out by reacting a trifluoromethylbenzenesulfonyl chloride derivative of formula (II) with a thioaniline, sulfinylaniline or sulfonylaniline derivative of formula (III). This reaction is usually conducted in a solvent. The solvents which can be employed include hydrocarbons such as benzene, toluene, xylene or the like, ethers such as tetrahydrofuran,dioxane or the like, nitrils such as acetonitrile, propionitrile or the like and pyridine. The compound of formula (III) can be used as substitute for the acid scavenger because of its being a basic material. Alternatively, inorganic bases such as sodium hydroxide, sodium hydride, potassium carbonate or the like and organic bases such as triethylamine, pyridine or the like can be employed as the acid scagengers.

The reaction proceeds even at room temperature, but a rise in reaction temperature within the range until the solvent boils can bring about a reduction in reaction time. If any salts of the acid scavenger exist after completion of reaction, removal by filtration of the salts and by distillation of the solvent can give a desired product. Alternatively, the extraction with water and an organic solvent such as benzene, toluene, tetrahydrofuran, chloroform or the like and removal by distillation of the solvent can give a desired product.

The preparation of the compounds of formula (I) where n is 0 according to the method (a) is illustrated in Examples 1-5 and 10-12 as mentioned below. The starting compounds of formula (II) include partly known compounds which can be prepared in known manner. On the other hand, new compounds of formula (II) can be prepared by an analogous way to those known compounds. For example, those compounds can be prepared by sulfonation of trifluoromethylbenzene derivatives with fuming sulfuric acid to give trifluoromethylbenzene sulfonic acid followed by treatment with phosphorus pentachloride, as in the manner disclosed in Chemical Abstracts, vol 54, 356 (1960), or by diazotization of trifluoromethylaniline derivatives with sodium nitrite followed by reaction with sulfur dioxide in the presence of cuprous chloride, as in the manner described in Journal of Organic Chemistry, vol. 25, 1824 (1960).

The compounds of formula (III) include partly known compounds which can be prepared by an analogous way to those known compounds. On the other hand, new compounds of formula (III) can be prepared by an analogous way to those known compounds. For instance, mercaptoaniline derivatives are reacted with halides to yield the thioaniline (n = 0). This thioaniline is acetylated and then oxidized with hydrogen peroxide or potassium permanganate in the usual way and deacetylated to give the sulfinylaniline (n = 1) or the sulfonylaniline (n = 2).

Method (b)

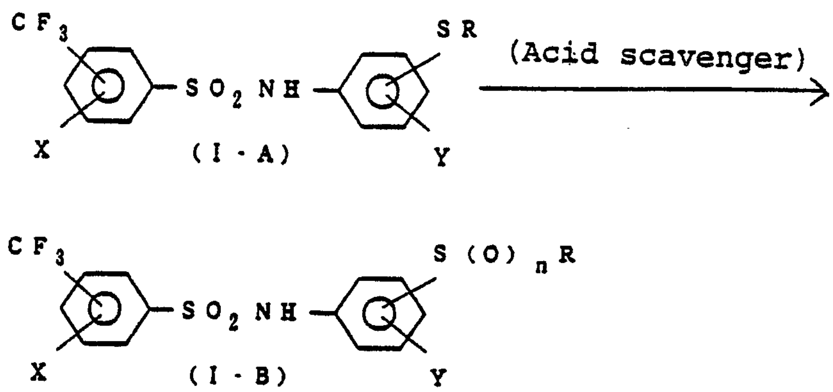


(I-A)

(I-B)

The compounds of formula (I) wherein n is 1 or 2, represented by formula (I-B) can be prepared by oxidation of the compounds of formula (I) wherein n is 0, represented by formula (I-A). The preparation in this way is performed by the action of an oxidizing agent in a suitable solvent. The oxidizing agents include hydrogen peroxide, potassium permanganate, potassium perchromate, metachloroperbenzoic acid or the like. The solvents which can be employed include water, acetic acid, acetone, methanol or the like. For the control of oxidation reaction and the improvement in yield, it is possible to add acids such as hydrochloric acid, sulfuric acid, acetic acid or the like and alkalis such as sodium hydroxide, potassium hydroxide or the like. In general, the compounds (n=1) are prepared in good yield by oxidation of the compounds (n=0) with hydrogen peroxide in acetic acid or methanol-sulfuric acid. The compounds (n=2) are prepared in good yield by oxidation of the compounds (n=0) with potassium permanganate in acetone-acetic acid. In every case, the reaction proceeds even at room temperature. In general, however, the reaction is often carried out in the range between ice-cold water and 50°C. After completion of reaction, the reaction product is extracted with water and an organic solvent such as benzene, toluene, tetrahydrofuran, chloroform, etc., and the solvent is distilled off to obtain the desired product. In the case of oxidation with potassium permanganate, addition of hydrogen peroxide before the solvent-extraction will provide easy extraction operation. The preparation of the compounds (I-B) is illustrated in Examples 6-9 and 13-15 below.

The compounds of formula (I) according to the present invention which are prepared in the above manner, have fungicidal and bactericidal activities for the control of various pathogenic fungi in agriculture and horticulture.

Thus, a further aspect of the invention provides a fungicide for agriculture and horticulture.

The compounds of the present invention can be formulated, when they are intended to be used as agricultural and horticultural fungicides, into any forms conventionally adopted in the art for these purposes. More particularly, the compounds of formula (I) may be compounded with suitable carriers and adjuvants, e.g., surface active agents, binders, stabilizers or the like to formulate wettable powder, emulsifiable concentrate, liquid formulation, sol (flowable formulation), oil solution, dust, DL (Driftless type) dust, coarse dust, granules, microgranules or the like according to the usual way.

The content (%) of the present compound in these formulations ranges from 1 to 90% by weight for wettable powder, emulsifiable concentrate, liquid formulation, sol and oil solution, from 0.1 to 10% by weight for dust, DL dust, microgranules and coarse dust and from 0.1 to 20% by weight for granules.

The carriers which can be employed in the above formulation may be either solid or liquid so far as they are conventionally used in chemicals for agriculture and horticulture, but not limitative to the specific materials.

Solid carriers include, e.g., mineral powders such as kaolin, bentonite, clay, montmorillonite, talc, diatomaceous earth, mica, vermiculite, plaster, calcium carbonate, apatite, white carbon, slaked lime, quarz sand, ammonium sulfate, urea, etc.; vegetable powders such as soybean powder, flour, wood powder, tobacco powder, starch, crystalline cellulose; high molecular compounds such as petroleum resin, polyvinyl chloride, ketone resin, dammar gum, etc.; alumina sillicates, saccharide polymers, high dispersible silicic acid, waxes or the like.

Liquid carrirs include water, alcohols such as methyl alcohol, ethyl alcohol, n-propyl alcohol, isopropyl alcohol, n-butyl alcohol, ethylene glycol, benzyl alcohol, etc.; aromatic hydrocarbons such as benzene, toluene, xylene, ethylbenzene, chlorobenzene, cumene, methylnaphthaline, etc.; halogenated hydrocarbons

such as chloroform, carbon tetrachloride, dichloromethane, chloroethylene, trichlorofluoromethane, dichlorofluoromethane, etc.; ethers such as ethyl ether, ethylene oxide, dioxane, tetrahydrofuran, etc; ketones such as acetone, methyl ethyl ketone, cyclohexanone, methyl isobutyl ketone, etc.; esters such as ethyl actate, butyl acetate, ethylene glycol acetate, amyl acetate, etc.; acid amides such as dimethylformamide, dimethylacetanilide, etc.; nitriles such as acetonitrile, propionitrile, acrylonitrile, etc.; sulfoxides such as dimethylsulfoxide, et.; alcohol ethers such as ethylene glycol monoethyl ether, etc.; aliphatic or alicyclic hydrocarbons such as n-bexane, cyclohexane, etc.; industrial gasolline such as petroleum ether, solvent naphtha, etc.; and petroleum fraction such as paraffins, kerosine, gas oil, etc.

In the formulation of emulsifiable concentrate, wettable powder, sol (flowable formulation) or the like, surface active agents (or emulsifiers) are used for the purpose of emulsification, dispersion, solubilization, wetting, foaming, lubrication, spreading or the like. Such surface active agents include, not by way of limitation, nonionic agents such as polyoxyethylene alkyl ethers, polyoxyethylene alkyl esters, polyoxyethylene sorbitan alkyl esters, sorbitan alkyl esters, etc.; anionic agents such as alkylbenzenesulfonate, alkylsulfosuccinate, polyoxyethylene alkyl sulfate, aryl sulfonate, etc.; cationic agents such as alkylamines, e.g., laurylamine, stearyltrimethyl ammonium chloride, alkyl dimethyl benzyl ammonium chloride, etc., and polyoxyethylene alkylamines or the like; and ampholytic agent such as carboxylic acid (betain type), sulfate, etc.

In addition to these agents, various kinds of adjuvants can be employed such as polyvinyl alcohol (PVA), carboxymethylcellulose (CMC), gum arabic, polyvinyl acetate, gelatin, casein, sodium alginate, gum tragacanth, etc.

In the application of the fungicides for agriculture and horticulture, the compounds of the present invention may be used in admixture with other fungicidal and insecticidal ingredients or the like. Such mixed use can achieve enhanced applicability (applicable insect pest, use method, use time, etc.), and in some cases a synergistic control effect can be expected by multiplier action of respective active ingredients.

Such fungicidal and insecticidal ingredients are, not by way of limitation, illustrated below.

Carbamate Fungicidal Ingredients

3,3-Ethylenebis(tetrahydro-4,6-dimethyl-2H-1,3,5-thiadiazine-2-thion),
Zinc or manganese ethylenebis(dithiocarbamate),
Bis(dimethyldithiocarbamoyl)disulfide,
Zinc propylenebis(dithiocarbamate),
Bis(dimethyldithiocarbamoyl)ethylenediamine,
Nickel dimethyldithiocarbamate,
Zinc-maneb complex,
Bis(dimethyldithiocarbamic acid),
Dizinc ethylenebis(dithiocarbamic acid),
Methyl-1-(n-Butylcarbamoyl)-2-benzimidazolecarbamate,
1,2-Bis(3-methoxycarbonyl-2-thioureido)benzene,
Potassium N-hydroxymethyl-N-methyldithiocarbamate, and
5-Methyl-10-butoxycarbonylamino-10,11-dehydrodibenzo (b,f)azepine, etc.

Pyridine Fungicidal Ingredients

Zinc bis(1-hydroxy-2(1H)pyridinethionate), and
2-Pyridinethiol-1-oxide sodium salt, etc.

Organophosphorus Fungicidal Ingredients

O,O-diisopropyl-S-benzylphosphorothioate, and
O-ethyl-S,S-diphenyl-dithiophosphate, etc.

Phtalimide Fungicidal Ingredients

N-(2,6-diethylphenyl)phthalimide, and
N-(2,6-diethylphenyl)-4-methylphthalimide, etc.

Dicarboxyimide Fungicidal Ingredients

N-trichloromethylthio-4-cyclohexene-1,2-dicarboxyimide, and
N-tetrachloroethylthio-4-cyclohexene-1,2-dicarboxyimide, etc.

Oxathine Fungicidal Ingredients

5,6-Dihydro-2-methyl-1,4-oxathine-3-carboxanilido-4,4-dioxide, and
5,6-Dihydro-2-methyl-1,4-oxathine-3-carboxanilide, etc.

Organochloro Fungicidal Ingredients

4,5,6,7-Tetrachlorophthalide, and
Tetrachloroisophthanitrile, etc.

Naphthoquinone Fungicidal Ingredients

2,3-Dichloro-1,4-naphthoquinone, and
2-Oxy-3-chloro-1,4-naphthoquinone copper sulfate, etc.

3,5-Dichloroaniline Fungicidal Ingredients

3-(3,5-Dichlorophenyl)-5-ethynoyl-5-methyloxazolidine- 2,4-dione,
N-(3,5-dichlorophenyl)-1,2-dimethylcyclopropane-1,2-dicarboxyimide, and
1-Isopropylcarbamoyl-3-(3,5-dichlorophenyl) hydantoin, etc.

Copper Fungicidal Ingredients

Basic copper chloride,
Basic copper sulfate,
Cupric hyddroxide,
Copper 8-quinolinolate (Oxine-copper), and
Copper nonylphenol sulfonate, etc.

Antibiotics

Polyoxin,
Piomycin,
Validamycin,
Blasticidin S
Kasugamycin, and
Streptomycin, etc.

Other Fungicidal Ingredients

Pentachloronitrobenzene,
1,4-Dichloro-2,5-dimethoxybenzene,
5-Methyl-s-triazole(3,4-b)benzothiazole,
2-(Thiocyanomethylthio)benzothiazole,
3-Hydroxy-5-methylisoxazole,
N-2,3-dichlorophenyltetrachlorophthalimido acid,
5-Ethoxy-3-trichloromethyl-1,2,4-thiadiazole,
2,4-Dichloro-6-(o-chloroanilino)-1,3,5-triazine,
2,3-Dicyano-1,4-dithioanthraquinone,
Cycloheximide,
Iron methanearsonate,
Diisopropyl-1,3-dithiolane-2-iridene malonate,
3-Allyloxy-1,2-benzoisothiazole-1,1-dioxide,
S-n-butyl-5′-para-t-butylbenzyl-N-3-pyridyldithiocarbonylimidate,
4-Chlorophenoxy-3,3-dimethyl-1-(1H,1,3,4-triazole-1-yl)-2-butanone,
Methyl-D,L-N-(2,6-dimethylphenyl)-N-(2′-methoxyacetyl)-alaninate,
N-propyl-N-[2-(2,4,6-trichlorophenoxy)ethyl]imidazole-1-carboxamide,
N-(3,5-dichlorophenyl)succinimide,
2-Dimethylamino-4-methyl-5-n-butyl-6-hydroxypyrimidine,
2,6-Dichloro-4-nitroaniline,
3-Methyl-4-chlorobenzthiazole-2-one,
1,2,5,6-Tetrahydro-4H-pyrrolo-[3,2,1-i,j]quinoline-2-one, 3′-Isopropoxy-2-methylbenzanilide,
1-[2-(2,4-dichlorophenyl)-4-ethyl-1,3-dioxorane-2-yl-methyl]-1H,1,2,4-triazole,
1,2-Benzisothiazoline-3-one,
N′-dichlorofluoromethylthio-N,N-dimethyl-N-phenylsulfamide,
Ethyl-N-(3-dimethylamino-propyl)thiocarbamate hydro chloride, and
S,S-6-methylquinoxaline-2,3-diyl-dithiocarbonate, etc.

Organophosphorus Insecticidal Ingredients

O,O-dimethyl O-(2-isopropyl-4-methyl-6-pyrimidinyl)phosphorothioate,
O,O-dimethyl O-(3-methyl-4-nitrophenyl),
O,O-dimethyl S-(N-methylcarbamoylmethyl)phosphorodithioate,
O,O-dimethyl S-(N-methyl-N-formylcarbamoylmethyl)phosphorodithioate,
O,O-dimethyl S-2-[(ethylthio)ethyl] phosphorodithioate,
O,O-diethyl S-2-[(ethylthio)ethyl] phosphorodithioate,
O,O-dimethyl-1-hydroxy-2,2,2-trichloroethylphosphonate,
O,O-diethyl-O-(5-phenyl-3-isooxazolyl)phosphorothioate,
O,O-dimethyl O-(2,5-dichloro-4-bromophenyl)phosphonothioate,
O,O-dimethyl-O-(3-methyl-4-methylmercaptophenyl)thiophosphate,
O-ethyl O-p-cyanophenyl phenylphosphonothioate,
O,O-dimethyl-S-(1,2-dicarboethoxyethyl)phosphorodithioate,
2-Chloro-(2,4,5-trichlorophenyl)vinyldimethyl phosphate,
2-Chloro-1-(2,4-dichlorophenyl)vinyldimethyl phosphate,
O,O-Dimethyl O-p-cyanophenyl phosphorothioate,
2,2-Dichlorovinyl dimethyl phosphate,
O,O-dimethyl O-2,4-dichlorophenyl phosphorothioate,
Ethyl mercaptophenylacetate O,O-dimethyl phosphorodithioate,
S-[(6-chloro-2-oxo-3-benzooxazolinyl)methyl]O,O-diethyl phosphorodithioate,
2-Chloro-1-(2,4-dichlorophenyl)vinyl diethylphosphate, O,O-diethyl O-(3-oxo-2-phenyl-2H-pyridazine-6-yl) phosphorothioate,
O,O-dimethyl S-(1-methyl-2-ethyl-sulfinyl)-ethyl phosphorothioate,
O,O-dimethyl S-phthalimide-methyl phosphorodithioate,
O,O-diethyl S(N-ethoxycarbonyl-N-methylcarbamoylmethyl)-phosphorodithioate,
O,O-dimethyl S-[2-methoxy-1,3,4-thiadiazol-5-(4H)-onyl-(4)-methyl]dithiophosphate,

2-Methoxy-4H-1,3,2-benzooxaphosphorine 2-sulfide,
O,O-dithyl O-(3,5,6-trichloro-2 pyridyl)phosphorothioate,
O-ethyl 0-2,4-dichlorophenyl thionobenzene phosphonate,
S-[4,6-diamino-S-triazine-2-yl-methyl]O,O-dimethyl phosphorodithioate,
O-ethyl O-p-nitrophenyl phenylphosphonothioate,
O,S-dimethyl N-acetyl phosphoroamidothioate,
2-Diethylamino-6-methylpyrimidine-4-yl-diethylphosphorothionate,
O,O-diethyl O-p-(methylsulfinyl)phenyl phosphorothioate,
O-ethyl s-propyl-2,4-dichlorophenyl phosphorodithioate,
and
cis-3-(Dimethoxyphosphinoxy)-N-methyl-cis-crotoneamide, etc.

Carbamate Insecticidal Ingredients

1-Naphthyl N-methylcarbamate,
S-methyl N-[(methylcarbamoyl)oxy]thioacetoimidate,
m-Tolyl N-methylcarbamate,
3,4-Xylyl N-methylcarbamate,
3,5-Xylyl N-methylcarbamate,
2-sec-Butylphenyl N-methylcarbamate,
2,3-Dihydro-2,2-dimethyl-7-benzofuranylmethylcarbamate,
2-Isopropoxyphenyl N-methylcarbamate,
1,3-Bis(carbamoylthio)-2-(N,N-dimethylamino)propane hydrochloride, and
2-Diethylamino-6-methylpyrimidine-4-yl-dimethylcarbamate, etc.

Other Insecticidal Ingredients

N,N-dimethyl N′-(2-methyl-4-chlorophenyl)formamidine hydrochloride,
Nicotine sulfate,
Milbemycin,
6-Methyl-2,3-quinoxalidithiocyclic S,S-dithiocarbonate,
2,4-Dinitro-6-sec-butylphenyl dimethylacrylate,
1,1-Bis(p-chlorophenyl)2,2,2-trichloroethanol,
2-(p-tert-Butylphenoxy)isopropyl-2′-chloroethylsulfite,
Azoxybenzene,
Di-(p-chlorophenyl)-cyclopropyl carbinol,
Di[tri(2,2-dimethyl-2-phenylethyl)tin]oxide,
1-(4-Chlorophenyl)-3-(2,6-difluorobenzoyl) urea, and
S-tricyclohexyltin O,O-diisopropylphosphorodithioate, etc.

The method for using the agricultural and horticultural fungicides of the invention is illustrated below. In the application of wettable powder, liquid formulation, emulsifiable concentrate, sol (flowable formulation) and oil solution, they are diluted to 100-10000 times with water and generally adjusted to a solution containing 1 to 10000 ppm of the active ingredient. This diluted solution is sprayed over the foliage in the disease infection area of plant in the amount of 50 to 300 liters, usually 100 to 200 liters per 10 ares.

The liquid formulation, emulsifiable concentrate and sol (flowable formulation) are sprayed as a concentrated solution without dilution with water or a solution diluted to 10 times or less with water, principally as ultra low volume spray (LV spray, ULV spray) for aerial application in the amount of about 50 to 3000 ml per 10 ares using helicopter or the like.

The dust, DL dust, microgranules and coarse dust are applied to the foliage in the disease infection area of plant, in soil and onto the surface of soil or water, in the amount of 2 to 5 kg per 10 ares (about 2 to 250 g as active ingredient).

Further, various kinds of the formulations as described above are used as a soil fungicide. The formulations such as dust, microgranules, etc., are applied by the following methods: (1) a method of applying the formulations to the whole surface of the field in the amount of 10 to 50 kg per 10 ares (about 10 to 1000 g of the active ingredients) prior to seeding or planting of crop seeds, and admixing sufficiently

with soils; (2) a method of applying the formulations to ridges prior to seedling or planting and admixing sufficiently with soils; and (3) a method of applying the formulations to planting holes in a given amount, e.g., 1-7 g of the formulations per hole (about 1-700 mg of the active ingredients), admixing with soils and thereafter planting. In the application of wettable agent and emulsifiable concentrate, they are diluted to 100-10000 times with water and then drenched to plant foots after seeding or planting in a given amount, e.g., about 1-5 liters/$m^2$.

Preparation of the compounds of formula (I) will be illustrated by the following non-limitative Examples 1-15.

Example 1

3-Trifluoromethyl-2′-methylthiobenzene-sulfonanilide (Compound No. 1)

13.9 g Of 2-methylthioaniline were dissolved in 100 ml of pyridine and 24.5 g of 3-trifluoromethylbenzenesulfonyl chloride were added dropwise with cooling in an ice-water. After the addition, the reaction mixture was stirred for 30 minutes and then pyridine was distilled off under reduced pressure. To the residue thus obtained were added 200 ml of a 1:1 mixture of tetrahydrofuran and toluene, and 100 ml of 1N HCl, the mixture was then shaken and the layers were separated. The organic layer was washed with water, dried over anhydrous sodium sulfate and the solvent was distilled off under reduced pressure to give 33.0 g of the title compound as pale brown crystals. Recrystallization from hexane-ethyl acetate gave white crystals, m.p. 82-83 °C.

Example 2

3-Trifluoromethyl-2′-ethylsulfonylbenzene-sulfonanilide (Compound No. 5)

The procedure of Example 1 was repeated using 18.5 g of 2-ethylsulfonylaniline and 24.5 g of 3-trifluoromethylbenzenesulfonyl chloride to give 36.5 g of the title compound as pale brown crystals. Recrystallization from hexane-acetone gave white crystals, m.p. 84-86.5 °C.

Example 3

3-Trifluoromethyl-2′-propylsulfonylbenzenesulfonaniline (Compound No. 7)

The procedure of Example 1 was repeated using 19.9 g of 2-propylsulfonylaniline and 24.5 g of 3-trifluoromethylbenzenesulfonyl chloride to give 39.1 g of the title compound as pale brown crystals. Recrystallization from cyclohexaneacetone gave white crystals, m.p. 75-78 °C.

Example 4

3-Trifluoromethyl-4′-chloro-2′-methylthiobenzenesulfonanilide (Compound No. 22)

The procedure of Example 1 was repeated using 17.4 g of 4-chloro-2-methylthioaniline and 24.5 g of 3-trifluoromethylbenzenesulfonyl chloride to yield 36.2 g of the title compound as pale yellow crystals. Recrystallization from hexane-ethyl acetate gave white crystals, m.p. 83-86 °C.

Example 5

3-Trifluoromethyl-2′,4′-dimethylthiobenzenesulfonanilide (Compound No. 27)

The procedure of Example 1 was repeated using 18.5 g of 2,4-dimethylthioaniline and 24.5 g of 3-trifluoromethylbenzenesulfonyl chloride to yield 38.1 g of the title compound as pale brown crystals. Recrystallization from cyclohexaneacetone gave white crystals, m.p. 98-100 °C.

Example 6

3-Trifluoromethyl-2′-methylsulfinylbenzenesulfonanilide (Compound No. 2)

34.7 g of 3-trifluoromethyl-2′-methylthiobenzenesulfonanilide (Compound No. 1) was dissolved in 100 ml of glacial acetic acid and 13.6 g of 30% hydrogen peroxide were added dropwise with cooling in water. After the addition, the reaction mixture was stirred at 35 °C for 1 hour, 100 ml of water and 200 ml of chloroform were added, the organic layer was washed with water and then dried over anhydrous sodium sulfate. The solvent was distilled off under reduced pressure to afford 34.1 g of the title compound as pale brown crystals. Recrystallization from hexane-ethyl acetate gave white crystals, m.p. 127.5-128.5 °C.

Example 7

3-Trifluoromethyl-2′,4′-dimethylsulfinylbenzenesulfonanilide (Compound No. 28)

The procedure of Example 6 was repeated using 39.3 g of 3-trifluoromethyl-2′,4′-dimethylbenzenesulfonanilide (Compound No. 27) to afford 40.8 g of the title compound as pale yellow crystals. Recrystallizatin from cyclohexane-ethyl acetate gave white crystals, m.p. 150-152 °C.

Example 8

3-Trifluoromethyl-2′-methylsulfonylbenzenesulfonanilide (Compound No. 3)

To a mixture of 34.7 g of 3-trifluoromethyl-2′-methylthiobenzenesulfonanilide (Compound No. 1), 12.0 g of glacial acetic acid and 300 ml of acetone were added portion-wise 23.2 g of potassium permanganate with cooling in an ice-water and the mixture was stirred for 30 minutes. The mixture was filtered through Celite, 100 ml of water and 200 ml of a 1:1 mixture of tetrahydrofuran and toluene were added, and then 10% hydrogen peroxide solution containing a small amount of sulfuric acid was added by portions until the color disappeared. The organic layer was washed with water, dried over anhydrous sodium sulfate and the solvent was distilled off under reduced pressure to leave 34.9 g of the title compound as a pale brown oil. Recrystallization from hexane-ethyl acetate gave white crystals, m.p. 116-117.5 °C.

Example 9

3-Trifluoromethyl-4′-chloro-2′-methylsulfonylbenzenesulfonanilide (Compound No. 24)

The procedure of Example 8 was repeated using 38.2 g of 3-trifluoromethyl-4′-chloro-2′-methylthiobenzenesulfonanilide (compound No. 22) to afford 37.0 g of the title compound as pale brown crystals. Recrystallization from cyclohexane-acetone gave white crystals, m.p. 144-147 °C.

Example 10

3-Trifluoromethyl-2′-allylthiobenzenesulfonanilide (Compound No. 46)

16.5 g Of 2-allylthioaniline were dissolved in 100 ml of pyridine, and 24.5 g of 3-trifluoromethylbenzenesulfonyl chloride was added dropwise with ice-water cooling. Then the mixture was stirred for 60 minutes and pyridine was distilled off under reduced pressure. To the residue thus obtained were added 200 ml of a 1:1 mixture of tetrahydrofuran and toluene, and 100 ml of 1N HCl. The mixture was shaken and the organic layer was washed with water, dried over anhydrous sodium sulfate and the solvent was distilled off under reduced pressure to yield 34.7 g of the title compound as a yellow oil. Purification by silica gel column chromatograph gave a colorless oil, n

Example 11

4-Chloro-3-trifluoromethyl-2′-methylthiobenzene sulfonanilide (Compound No. 58)

The procedure of Example 10 was repeated using 13.9 g of 2-methylthioaniline and 27.9 g of 4-chloro-3-trifluoromethylbenzenesulfonyl chloride to yield 35.9 g of the title compound as pale brown crystals. Recrystallization from hexane-ethyl acetate gave white crystals, m.p. 90-92° C.

Example 12

4-Chloro-3-trifluoromethyl-2′-isopropylthiobenzensulfonanilide (Compound No. 66)

The procedure of Example 10 was repeated using 16.7 g of 2-isopropylthioaniline and 27.9 g of 4-chloro-3-trifluoromethylbenzenesulfonyl chloride to yield 37.7 g of the title compound as a brown oil. Purification by silicagel-colum chromatography gave a colorless oil, n

Example 13

4-Chloro-3-trifluoromethyl-2′-methylsulfinylbenzenesulfonanilide (Compound No. 59)

38.2 g Of 4-chloro-3-trifluoromethyl-2′-methylthiobenzenesulfonanilide (Compound No. 58) were dissolved in 100 ml of glacial acetic acid, and 13.6 g of 30% hydrogen peroxide were added dropwise with cooling in water. After the addition, the mixture was stirred at 30° C for 2 hours, 100 ml of water and 200 ml of chloroform were added, and the organic layer was washed with water and then dried over anhydrous sodium sulfate. The solvent was distilled off under reduced pressure to give 37.4 g of the title compound as pale brown crystals. Recrystallization from hexane-acetone gave white crystals, m.p. 162-164° C.

Example 14

3-Trifluoromethyl-2′-allylsulfonylbenzenesulfonanilide (Compound No. 47)

To a mixture of 37.3 g of 3-trifluoromethyl-2′-allylthiobenzenesulfonanilide (Compound No. 46), 12.0 g of acetic acid and 300 ml of acetone were added portionwise 23.2 g of potassium permanganate with cooling in an ice-water, and the mixture was stirred for 60 minutes. The mixture was filtered through Celite, 100 ml of water and 200 ml of a 1:1 mixture of tetrahydrofuran and toluene were added to the filtrate, and then 10% hydrogen peroxide solution containing a small amount of sulfuric acid was added by portions until the color disappeared. The organic layer was washed with water, dried over anhydrous sodium sulfate, and the solvent was distilled off under reduced pressure to leave 36.0 g of the title compound as pale brown crystals. Recrystallization from hexane-acetone gave white crystals, m.p. 80-82° C.

Example 15

4-Chloro-3-trifluoromethyl-2′-isopropylsulfonylbenzenesulfonanilide (Compound No. 67)

The procedure of Example 14 was repeated using 41.0 g of 4-chloro-3-trifluoromethyl-2′-isopropylthiobenzenesulfonanilide (Compound No. 66) to afford 40.2 g of the title compound as pale brown crystals. Recrystallization from cyclohexane-ethyl acetate gave white crystals, m.p. 138-140 °C.

The following non-limiting Examples serve to illustrate the process for the preparation of the fungicidal formulations of the present invention for use in agriculture and horticulture. One skilled in the art can vary the types of the test compounds, carriers and adjuvants of the formulations without departing from the scope and spirit of the present invention. All parts are by weight unless otherwise stated.

Example 16 (Dust)

A homogeneous mixture of 0.5 parts of Compound No. 3, 0.5 parts of PAP (Modifier of physical properties, "Isopropyl Acid Phosphate", Nippon Kagaku Kogyo K.K.) and 99 parts of clay was pulverized to obtain a dust containing 0.5% of the active ingredient.

Example 17 (Dust)

The procedure of Example 16 was followed using 0.5 parts of Compound No. 24 to obtain a dust containing 0.5% of the active ingredient.

Example 18 (Dust)

The procedure of Example 16 was followed using 0.5 parts of Compound No. 67 to give a dust containing 0.5% of the active ingredient.

Example 19 (Wettable powder)

A homogeneous mixture of 30 parts of Compound No. 2, 3 parts of calcium alkylbenzenesulfonate, 5 parts of polyoxy ethylene nonyl phenyl ether and 62 parts of clay was pulverized to give a wettable powder containing 30% of the active ingredient.

Example 20 (Wettable powder)

The procedure of Example 19 was followed using 30 parts of Compound No. 29 to give a wettable powder containing 30% of the active ingredient.

Example 21 (Wettable powder)

The procedure of Example 19 was followed using 30 parts of Compound No. 60 to give a wettable powder containing 30% of the active ingredient.

Example 22 (Emulsifiable concentrate)

30 Parts of Compound No. 4, 40 parts of methyl ethyl ketone and 30 parts of polyoxyethylene nonyl phenyl ether were mixed and dissolved to give an emulsifiable concentrate containing 30% of the active ingredient.

Example 23 (Emulsifiable concentrate)

The procedure of Example 22 was followed using 30 parts of Compound No. 21 to give an emulsifiable concentrate containing 30% of the active ingredient.

Example 24 (Emulsifiable concentrate)

The procedure of Example 22 was followed using 30 parts of Compound No. 69 to give an emulsifiable concentrate containing 30% of the active ingredient.

Example 25 (Granules)

To a homogeneous mixture of 1 part of Compound No. 5, 1 part of lauryl sulfate, 1 part of calcium ligninesulfonate, 25 parts of bentonite and 72 parts of white carbon were added 15 parts of water, kneaded with a kneader and then granulated. The granules thus obtained were dried with a fluidized dryer to obtain granules containing 1% of the active ingredient.

Example 26 (Granules)

The procedure of Example 25 was followed using 1 part of Compond No. 18 to give granules containing 1% of the active ingredient.

Example 27 (Granules)

The procedure of Example 25 was followed using 1 part of Compound No. 81 to give granules containing 1% of the active ingredient.

Example 28 (Oil solution)

10 Parts of Compound No. 6 and 90 parts of Ethyl Cellosolve were mixed and dissolved to give an oil solution containing 10% of the active ingredient.

Example 29 (Oil solution)

The procedure of Example 28 was followed using 10 parts of Compound No. 23 to give an oil solution containing 10% of the active ingredient.

Example 30 (Oil solution)

The procedure of Example 28 was followed using 10 parts of Compound No. 77 to give an oil solution containing 10% of the active ingredient.

Example 31 (Sol)

To a mixture of 40 parts of Compound No. 7 pulverized to a particle size of less than 10μ, 2 parts of lauryl sulfate, 2 parts of sodium alkylnaphthalenesulfonate and 1 part of hydroxypropyl cellulose were added 55 parts of water and the whole was mixed homogeneously to give a sol containing 40% of the active ingredient.

Example 32 (Sol)

The procedure of Example 31 was followed using 40 parts of Compound No. 9 to give a sol containing 40% of the active ingredient.

Example 33 (Sol)

The procedure of Example 31 was followed using 40 parts of Compound No. 83 to give a sol containing 40% of the active ingredient.

The compounds of formula (I) of the present invention have remarkably more effective fungicidal activities in comparison with known similar compounds. Firstly, the compounds of the present invention exhibit excellent fungicidal activities for controlling a wide variety of diseases such as damping-off, blast, sheath blight and "Bakanae" disease of rice, e.g. rice seediling blight (Fusarium roseum), rice blast (Pyricularia oryzae), rice sheath blight (Rhizoctonia solani), "bakanae" disease (Gibbereilla fujikauroi); powdery mildew, rust and downy mildew of vegetables and fruit trees, e.g. cucumber powdery mildew (Sphaerotheca fuliginea), apple powdery mildew (Podosphaera leucotricha), grape powdery mildew (Uncinula neccator), cucumber downy mildew (Pseudoperonospora cubensis), grape downy mildew (Plasmopara viticola), welsh onion rust (Puccinia allii); clubroot of Cruciferae vegetables, e.g. chinese cabbage clubroot (Plasmodiophora brassicae); damping-off and leaf sopt of beet, e.g. beet domping-off (Rhizoctonia solani), beet cercospora leaf spot (Cercospora beticola); and stinking smut, powdery mildew, leaf rust and scab of wheat and barley, e.g. wheat bunt (Tilletia caries), barley powdery mildew (Erysiphe graminis), wheat leaf rust (Puccinia recondita), barley scab (Gibberella zeae). Especially, the compounds of the present invention are highly effective for controlling clubroot of Cruciferae vegetables such as chinese cabbage, cabbage, turnip, etc., as well as for controlling rice blast, powdery mildew, leaf rust, downy mildew, etc. of vegetables, fruit trees, crops, etc. Secondly, the compounds of the present invention can effectively control clubroot of Cruciferae vegetables even when used in an extremely lower amount as compared with that of the previously used pentachloronitrobenzene (PCNB). Thirdly, they can be applied to useful plants safely without causing any damages even when applied or sprayed in a higher dose than conventionally used for controlling fungi.

As mentioned above, the compounds of the present invention are useful as agricultural and horticultural fungicides. They can be used as a new fungicide to protect Cruciferae vegetables from clubroot which is difficult to control, instead of the prior pentachloronitrobenzene.

The fungicidal activities and the utilities of the compounds of the formula (I) according to the present invention are illustrated in the following test Examples.

Test Example 1

Test for control effect on clubroot of chinese cabbage

Soils contaminated by pathogenic fungus (Plasmodiophora brassicae) of clubroot in chinese cabbage were passed through 5 mm sieve, 1 kg portion thereof was put into a vinyl-bag and admixed well with a predetermined amount of a dust prepared in accordance with Example 10. The soils thus treated with chemicals were charged to a series of square pots (20 cm x 10 cm x 10 cm), and seeded chinese cabbage seeds (variety: Sakumidori) at 5 spots per each pot. Thereafter, the culture control of the chinese cabbage was carried out in a glass greenhouse. At a cotyledon developing stage, 5 seedlings per each pot were left and the rest were taken out.

40 Days after the seeding, all plants were taken out from the pots and observed for the presence of the disease in their roots to evaluate the degree of symptoms. Control value (%) was calculated from these assessments of the severity in the treated plots and non-treated plots.

$$\text{Severity} = \frac{(3a + ab + c)}{3N} \times 10$$

N: Total numbers of plants observed
a: Formation of large club at the base of the main root, the growth of the plant being greatly suppressed
b: Formation of a small club at the tip of the main root or lateral root, the growth of the plant being suppressed moderately
c: Formation of only a bit of club at the lateral root, the growth of the plant being almost normal
d: Sound (healthy)

$$\text{Control value(\%)} = \frac{\text{Severity in treated plot}}{\text{Severity in untreted plot}} \times 100$$

The phytotoxicity of the test compounds was evaluated by the visual observation of the plants mainly about the growth, yellowing of leaves etc., and scored according to the following rating:
0: No phytotoxicity
1: Slight phytotoxicity
2: Moderate phytotoxicity
3: Severe phytotoxicity
4: Very severe phytolixicity
5: Death

This test was performed in three-series for each compound tested. The results are shown in Table 2.

Table 2 Control effect on clubroot of chinese cabagge

| Dosage g/10a. / Compd. No. | Control value (%) | | | Phytotoxicity | | |
|---|---|---|---|---|---|---|
| | 100 | 50 | 25 | 100 | 50 | 25 |
| 1 | 100 | 100 | 92 | 0 | 0 | 0 |
| 2 | 100 | 100 | 96 | 0 | 0 | 0 |
| 3 | 100 | 100 | 100 | 0 | 0 | 0 |
| 4 | 100 | 100 | 90 | 0 | 0 | 0 |
| 5 | 100 | 100 | 100 | 0 | 0 | 0 |
| 6 | 100 | 100 | 93 | 0 | 0 | 0 |
| 7 | 100 | 100 | 100 | 0 | 0 | 0 |
| 8 | 100 | 100 | 95 | 0 | 0 | 0 |
| 9 | 100 | 100 | 100 | 0 | 0 | 0 |
| 10 | 100 | 100 | 92 | 0 | 0 | 0 |
| 11 | 100 | 100 | 94 | 0 | 0 | 0 |
| 12 | 100 | 100 | 100 | 0 | 0 | 0 |
| 13 | 100 | 100 | 92 | 0 | 0 | 0 |
| 14 | 100 | 100 | 96 | 0 | 0 | 0 |
| 15 | 100 | 100 | 100 | 0 | 0 | 0 |
| 16 | 100 | 100 | 100 | 0 | 0 | 0 |
| 17 | 100 | 100 | 100 | 0 | 0 | 0 |
| 18 | 100 | 100 | 100 | 0 | 0 | 0 |
| 19 | 100 | 100 | 97 | 0 | 0 | 0 |
| 20 | 100 | 100 | 98 | 0 | 0 | 0 |
| 21 | 100 | 100 | 100 | 0 | 0 | 0 |
| 22 | 100 | 100 | 100 | 0 | 0 | 0 |

Table 2 (Cont'd)

| Dosage g/10a. / Compd. No. | Control value (%) 100 | 50 | 25 | Phytotoxicity 100 | 50 | 25 |
|---|---|---|---|---|---|---|
| 23 | 100 | 100 | 100 | 0 | 0 | 0 |
| 24 | 100 | 100 | 100 | 0 | 0 | 0 |
| 25 | 100 | 100 | 96 | 0 | 0 | 0 |
| 26 | 100 | 100 | 100 | 0 | 0 | 0 |
| 27 | 100 | 100 | 98 | 0 | 0 | 0 |
| 28 | 100 | 100 | 100 | 0 | 0 | 0 |
| 29 | 100 | 100 | 100 | 0 | 0 | 0 |
| 30 | 100 | 100 | 100 | 0 | 0 | 0 |
| 31 | 100 | 100 | 100 | 0 | 0 | 0 |
| 32 | 100 | 100 | 100 | 0 | 0 | 0 |
| 33 | 100 | 100 | 100 | 0 | 0 | 0 |
| 34 | 100 | 100 | 100 | 0 | 0 | 0 |
| 35 | 100 | 100 | 100 | 0 | 0 | 0 |
| 36 | 100 | 100 | 100 | 0 | 0 | 0 |
| 37 | 100 | 100 | 100 | 0 | 0 | 0 |
| 38 | 100 | 100 | 98 | 0 | 0 | 0 |
| 39 | 100 | 100 | 100 | 0 | 0 | 0 |
| 40 | 100 | 100 | 96 | 0 | 0 | 0 |
| 41 | 100 | 100 | 100 | 0 | 0 | 0 |
| 42 | 100 | 100 | 100 | 0 | 0 | 0 |
| 43 | 100 | 100 | 100 | 0 | 0 | 0 |
| 44 | 100 | 100 | 97 | 0 | 0 | 0 |

Table 2 (Cont'd)

| Dosage g/10a. / Compd. No. | Control value (%) 100 | 50 | 25 | Phytotoxicity 100 | 50 | 25 |
|---|---|---|---|---|---|---|
| 45 | 100 | 100 | 100 | 0 | 0 | 0 |
| 46 | 100 | 100 | 100 | 0 | 0 | 0 |
| 47 | 100 | 100 | 100 | 0 | 0 | 0 |
| 48 | 100 | 100 | 100 | 0 | 0 | 0 |
| 49 | 100 | 100 | 100 | 0 | 0 | 0 |
| 50 | 100 | 100 | 100 | 0 | 0 | 0 |
| 51 | 100 | 100 | 100 | 0 | 0 | 0 |
| 52 | 100 | 100 | 100 | 0 | 0 | 0 |
| 53 | 100 | 100 | 100 | 0 | 0 | 0 |
| 54 | 100 | 100 | 96 | 0 | 0 | 0 |
| 55 | 100 | 100 | 100 | 0 | 0 | 0 |
| 56 | 100 | 100 | 97 | 0 | 0 | 0 |
| 57 | 100 | 100 | 98 | 0 | 0 | 0 |
| 58 | 100 | 100 | 100 | 0 | 0 | 0 |
| 59 | 100 | 100 | 100 | 0 | 0 | 0 |
| 60 | 100 | 100 | 100 | 0 | 0 | 0 |
| 61 | 100 | 100 | 100 | 0 | 0 | 0 |
| 62 | 100 | 100 | 100 | 0 | 0 | 0 |
| 63 | 100 | 100 | 100 | 0 | 0 | 0 |
| 64 | 100 | 100 | 100 | 0 | 0 | 0 |
| 65 | 100 | 100 | 100 | 0 | 0 | 0 |
| 66 | 100 | 100 | 100 | 0 | 0 | 0 |

Table 2 (Cont'd)

| Dosage g/10a. / Compd. No. | Control value (%) 100 | 50 | 25 | Phytotoxicity 100 | 50 | 25 |
|---|---|---|---|---|---|---|
| 67 | 100 | 100 | 100 | 0 | 0 | 0 |
| 68 | 100 | 100 | 100 | 0 | 0 | 0 |
| 69 | 100 | 100 | 100 | 0 | 0 | 0 |
| 70 | 100 | 100 | 100 | 0 | 0 | 0 |
| 71 | 100 | 100 | 100 | 0 | 0 | 0 |
| 72 | 100 | 100 | 100 | 0 | 0 | 0 |
| 73 | 100 | 100 | 100 | 0 | 0 | 0 |
| 74 | 100 | 100 | 98 | 0 | 0 | 0 |
| 75 | 100 | 100 | 100 | 0 | 0 | 0 |
| 76 | 100 | 100 | 97 | 0 | 0 | 0 |
| 77 | 100 | 100 | 100 | 0 | 0 | 0 |
| 78 | 100 | 100 | 98 | 0 | 0 | 0 |
| 79 | 100 | 100 | 100 | 0 | 0 | 0 |
| 80 | 100 | 100 | 96 | 0 | 0 | 0 |
| 81 | 100 | 100 | 98 | 0 | 0 | 0 |
| 82 | 100 | 100 | 98 | 0 | 0 | 0 |
| 83 | 100 | 100 | 100 | 0 | 0 | 0 |
| Compara. compound A | 82 | 63 | 21 | 2 | 1 | 0 |
| 〃 B | 83 | 65 | 18 | 1 | 0 | 0 |
| 〃 C | 84 | 66 | 20 | 2 | 1 | 0 |
| 〃 D | 58 | 13 | 0 | 1 | 0 | 0 |

Table 2 (Cont'd)

| Dosage g/10a. / Compd. No. | | Control value (%) | | | Phytotoxicity | | |
|---|---|---|---|---|---|---|---|
| | | 100 | 50 | 25 | 100 | 50 | 25 |
| Compara. compound | E | 62 | 15 | 0 | 2 | 1 | 0 |
| 〃 | F | 0 | 0 | 0 | 0 | 0 | 0 |

Comparative compound A:

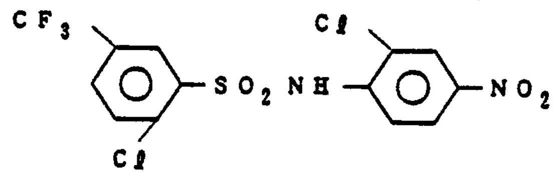

(Japanese Patent 61-197553 A)

Comparative compound B:

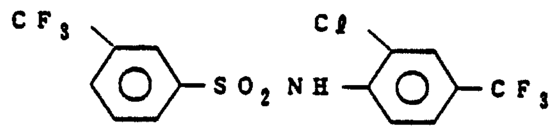

(Japanese Patent 61-200959 A)

Comparative compound C:

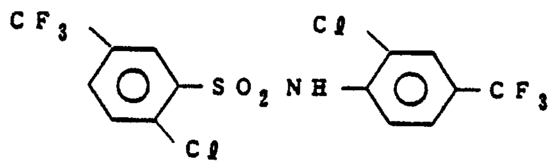

(Japanese Patent 61-205247 A)

Comparative Compound D

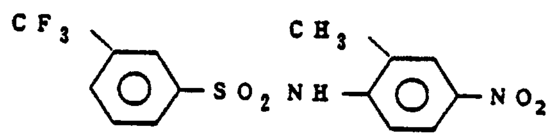

(Japanese Patent 61-271270 A)

Comparative compound E:

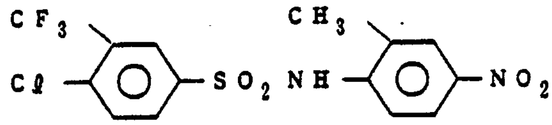

(Japanese Patent 61-271270 A)

Comparative compound F:

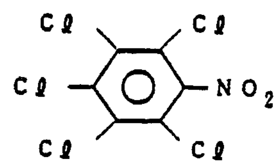

(commercially available as "PCNB")

Test Example 2 Test for control effect on rice blast

Over the 3rd-leaf stage seedlings of rice (variety: Asahi) soil cultured in a biscuit pot of 9 cm in diameter in a greenhouse was sprayed a test liquid prepared by diluting a wettable powder prepared according to the general procedure of Example 12 to a predetermined concentration with water. Thereafter, the seedlings were kept overnight under humidified circumstances (at 95-100% relative humidity and 24-25 °C). One day after the spraying of the test liquid, the seedlings were inoculated by atomizing technique with a spore suspension of rice blast fungus (Piricularia oryzae). Five (5) days after the inoculation, the number of lesions per leaf of the third stage leaves was investigated and the control value was calculated on the basis of the following equation. Furthermore, the phytotoxicity against the rice plant of the test compound was indicated on the same ratings as described in Test Example 1.

This test was carried out in three-series of pots for each test liquid to determine an average control value (%). The results are shown in Table 3.

$$\text{Control value (\%)} = \left(1 - \frac{\text{Number of lesions per leaf in treated plot}}{\text{Number of lesions per leaf in untreated plot}}\right) \times 100$$

Table 3 Control effect on rice blast

| Compound No. | Concentration of spray(ppm) | Control value (%) | Phytotoxicity |
|---|---|---|---|
| 1 | 200 | 100 | 0 |
| 2 | 200 | 100 | 0 |
| 3 | 200 | 100 | 0 |
| 4 | 200 | 100 | 0 |
| 5 | 200 | 100 | 0 |
| 6 | 200 | 100 | 0 |
| 7 | 200 | 100 | 0 |
| 8 | 200 | 100 | 0 |
| 9 | 200 | 100 | 0 |
| 10 | 200 | 100 | 0 |
| 11 | 200 | 100 | 0 |
| 12 | 200 | 100 | 0 |
| 13 | 200 | 100 | 0 |
| 14 | 200 | 100 | 0 |
| 15 | 200 | 100 | 0 |
| 16 | 200 | 100 | 0 |
| 17 | 200 | 100 | 0 |
| 18 | 200 | 100 | 0 |
| 19 | 200 | 100 | 0 |
| 20 | 200 | 100 | 0 |

Table 3 (Cont'd)

| Compound No. | Concentration of spray (ppm) | Control value (%) | Phytotoxicity |
|---|---|---|---|
| 21 | 200 | 100 | 0 |
| 22 | 200 | 100 | 0 |
| 23 | 200 | 100 | 0 |
| 24 | 200 | 100 | 0 |
| 25 | 200 | 100 | 0 |
| 26 | 200 | 100 | 0 |
| 27 | 200 | 100 | 0 |
| 28 | 200 | 100 | 0 |
| 29 | 200 | 100 | 0 |
| 30 | 200 | 100 | 0 |
| 31 | 200 | 100 | 0 |
| 32 | 200 | 100 | 0 |
| 33 | 200 | 100 | 0 |
| 34 | 200 | 100 | 0 |
| 35 | 200 | 100 | 0 |
| 36 | 200 | 100 | 0 |
| 37 | 200 | 100 | 0 |
| 38 | 200 | 100 | 0 |
| 39 | 200 | 100 | 0 |
| 40 | 200 | 100 | 0 |

Table 3 (Cont'd)

| Compound No. | Cencentration of spray (ppm) | Control value (%) | Phytotoxicity |
|---|---|---|---|
| 41 | 200 | 100 | 0 |
| 42 | 200 | 100 | 0 |
| 43 | 200 | 100 | 0 |
| 44 | 200 | 100 | 0 |
| 45 | 200 | 100 | 0 |
| 46 | 200 | 100 | 0 |
| 47 | 200 | 100 | 0 |
| 48 | 200 | 100 | 0 |
| 49 | 200 | 100 | 0 |
| 50 | 200 | 100 | 0 |
| 51 | 200 | 100 | 0 |
| 52 | 200 | 100 | 0 |
| 53 | 200 | 100 | 0 |
| 54 | 200 | 100 | 0 |
| 55 | 200 | 100 | 0 |
| 56 | 200 | 100 | 0 |
| 57 | 200 | 100 | 0 |
| 58 | 200 | 100 | 0 |
| 59 | 200 | 100 | 0 |
| 60 | 200 | 100 | 0 |

Table 3 (Cont'd)

| Compound No. | Cencentration of spray(ppm) | Control value (%) | Phytotoxicity |
|---|---|---|---|
| 61 | 200 | 100 | 0 |
| 62 | 200 | 100 | 0 |
| 63 | 200 | 100 | 0 |
| 64 | 200 | 100 | 0 |
| 65 | 200 | 100 | 0 |
| 66 | 200 | 100 | 0 |
| 67 | 200 | 100 | 0 |
| 68 | 200 | 100 | 0 |
| 69 | 200 | 100 | 0 |
| 70 | 200 | 100 | 0 |
| 71 | 200 | 100 | 0 |
| 72 | 200 | 100 | 0 |
| 73 | 200 | 100 | 0 |
| 74 | 200 | 100 | 0 |
| 75 | 200 | 100 | 0 |
| 76 | 200 | 100 | 0 |
| 77 | 200 | 100 | 0 |
| 78 | 200 | 100 | 0 |
| 79 | 200 | 100 | 0 |
| 80 | 200 | 100 | 0 |

Table 3 (Cont'd)

| Compound No. | | Concentration of spray (ppm) | Control value (%) | Phytotoxicity |
|---|---|---|---|---|
| 81 | | 200 | 100 | 0 |
| 82 | | 200 | 100 | 0 |
| 83 | | 200 | 100 | 0 |
| Compara. compound | A | 200 | 0 | 2 |
| 〃 | B | 200 | 0 | 1 |
| 〃 | C | 200 | 0 | 2 |
| 〃 | D | 200 | 0 | 2 |
| 〃 | E | 200 | 0 | 2 |
| 〃 | G | 200 | 48 | 0 |

Comparative compound G: 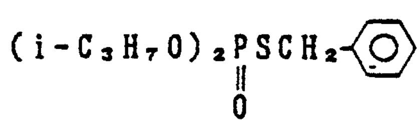

(Commercially available as "IBP")

Test Example 3 Test for the control effect on barley powdery mildew

Over the 1st-leaf stage seedlings of barley (variety: Azumagolden) soil-cultured in a biscuit pot of 9 cm in diameter in a greenhouse were sprayed 10 ml of a test liquid which was prepared by diluting a wettable powder prepared according to Example 12 to a predetermined concentration. After allowing overnight, the seedlings were inoculated by atomizing with a spore suspension of powdery mildew fungus (Erysiphe graminis). Seven days after the inoculation, the area (%) of lesions of barley powdery mildew was assessed and the control value (%) was calculated on the basis of the following equation. Furthermore, the phytotoxicity against the barley of the test compound was estimated on the same ratings as described in Test Example 1. The results are shown in Table 4.

$$\text{Control value (\%)} = \left(1 - \frac{\text{Area of lesions per leaf in treated plot}}{\text{Area of lesions per leaf in untreated plot}}\right) \times 100$$

Table 4 Control effect on barley powdery mildew

| Compound No. | Concentration of spray(ppm) | Control value(%) | Phytotoxicity |
|---|---|---|---|
| 1 | 200 | 100 | 0 |
| 2 | 200 | 100 | 0 |
| 3 | 200 | 100 | 0 |
| 4 | 200 | 100 | 0 |
| 5 | 200 | 100 | 0 |
| 6 | 200 | 100 | 0 |
| 7 | 200 | 100 | 0 |
| 8 | 200 | 100 | 0 |
| 9 | 200 | 100 | 0 |
| 10 | 200 | 100 | 0 |
| 11 | 200 | 100 | 0 |
| 12 | 200 | 100 | 0 |
| 13 | 200 | 100 | 0 |
| 14 | 200 | 100 | 0 |
| 15 | 200 | 100 | 0 |
| 16 | 200 | 100 | 0 |
| 17 | 200 | 100 | 0 |
| 18 | 200 | 100 | 0 |
| 19 | 200 | 100 | 0 |
| 20 | 200 | 100 | 0 |

Table 4 (Cont'd)

| Compound No. | Concentration of spray (ppm) | Control value (%) | Phytotoxicity |
|---|---|---|---|
| 21 | 200 | 100 | 0 |
| 22 | 200 | 100 | 0 |
| 23 | 200 | 100 | 0 |
| 24 | 200 | 100 | 0 |
| 25 | 200 | 100 | 0 |
| 26 | 200 | 100 | 0 |
| 27 | 200 | 100 | 0 |
| 28 | 200 | 100 | 0 |
| 29 | 200 | 100 | 0 |
| 30 | 200 | 100 | 0 |
| 31 | 200 | 100 | 0 |
| 32 | 200 | 100 | 0 |
| 33 | 200 | 100 | 0 |
| 34 | 200 | 100 | 0 |
| 35 | 200 | 100 | 0 |
| 36 | 200 | 100 | 0 |
| 37 | 200 | 100 | 0 |
| 38 | 200 | 100 | 0 |
| 39 | 200 | 100 | 0 |
| 40 | 200 | 100 | 0 |

Table 4 (Cont'd)

| Compound No. | Concentration of spray (ppm) | Control value (%) | Phytotoxicity |
|---|---|---|---|
| 41 | 200 | 100 | 0 |
| 42 | 200 | 100 | 0 |
| 43 | 200 | 100 | 0 |
| 44 | 200 | 100 | 0 |
| 45 | 200 | 100 | 0 |
| 46 | 200 | 100 | 0 |
| 47 | 200 | 100 | 0 |
| 48 | 200 | 100 | 0 |
| 49 | 200 | 100 | 0 |
| 50 | 200 | 100 | 0 |
| 51 | 200 | 100 | 0 |
| 52 | 200 | 100 | 0 |
| 53 | 200 | 100 | 0 |
| 54 | 200 | 100 | 0 |
| 55 | 200 | 100 | 0 |
| 56 | 200 | 100 | 0 |
| 57 | 200 | 100 | 0 |
| 58 | 200 | 100 | 0 |
| 59 | 200 | 100 | 0 |
| 60 | 200 | 100 | 0 |

Table 4 (Cont'd)

| Compound No. | Concentration of spray (ppm) | Control value (%) | Phyto-toxicity |
|---|---|---|---|
| 61 | 200 | 100 | 0 |
| 62 | 200 | 100 | 0 |
| 63 | 200 | 100 | 0 |
| 64 | 200 | 100 | 0 |
| 65 | 200 | 100 | 0 |
| 66 | 200 | 100 | 0 |
| 67 | 200 | 100 | 0 |
| 68 | 200 | 100 | 0 |
| 69 | 200 | 100 | 0 |
| 70 | 200 | 100 | 0 |
| 71 | 200 | 100 | 0 |
| 72 | 200 | 100 | 0 |
| 73 | 200 | 100 | 0 |
| 74 | 200 | 100 | 0 |
| 75 | 200 | 100 | 0 |
| 76 | 200 | 100 | 0 |
| 77 | 200 | 100 | 0 |
| 78 | 200 | 100 | 0 |
| 79 | 200 | 100 | 0 |
| 80 | 200 | 100 | 0 |

Table 4 (Cont'd)

| Compound No. | | Concentration of spray (ppm) | Control value (%) | Phytotoxicity |
|---|---|---|---|---|
| 81 | | 200 | 100 | 0 |
| 82 | | 200 | 100 | 0 |
| 83 | | 200 | 100 | 0 |
| Compara. compound | A | 200 | 0 | 2 |
| 〃 | B | 200 | 0 | 1 |
| 〃 | C | 200 | 0 | 2 |
| 〃 | D | 200 | 0 | 1 |
| 〃 | E | 200 | 0 | 2 |
| 〃 | H | 200 | 78 | 0 |

Comparative compound H: 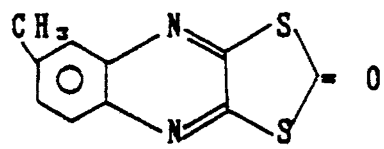

(Commercially available as "Quinomethionate")

Test Example 4 Test for the control effect on wheat leaf rust

Over the 1st-leaf stage young seedlings of wheat (variety: Norin No. 61) soil-cultured in a biscuit pot of 9 cm in diameter in a greenhouse was sprayed 20 ml of a test liquid per 3 pots which was prepared by diluting a wettable powder prepared according to Example 12 to a predetermined concentration. One day after the spraying of the test liquid, the leaves to be treated were inoculated by atomizing with a spore suspension of leaf rust fungus, which spore suspension was prepared by suspending an uredospore of wheat leaf rust fungus (Puccinia recondita) formed previously on the leaf of wheat in a sterile water to which 50 ppm of Tween 20® (trade name of polyoxyethylene sorbitan monolaurate, Kao Soap Co., Ltd.) had been added so as to give about 50 spores as observed at one view under a microscope (X 150). After keeping

overnight in a greenhouse at 20 °C, the treated seedlings were transferred to a pathogenic greenhouse at 20 °C to stimulate an incidence. Ten days after the inoculation, the seedlings were taken from the greenhouse and the number of lesions per leaf was assessed and the control value (%) was calculated on the basis of the following equation. The test was performed in three-series of pots for each test compound to determine an average control value (%). Furthermore, the phytotoxicity against wheat of the test compound was estimated on the same ratings as described in Test Example 1. The results are shown in Table 5.

$$\text{Control value (\%)} = \left(1 - \frac{\text{Number of lesions per leaf in treated plot}}{\text{Number of lesions per leaf in untreated plot}}\right) \times 100$$

Table 5 Control effect on wheat leaf rust

| Compound No. | Concentration of spray (ppm) | Control value (%) | Phytotoxicity |
|---|---|---|---|
| 1 | 200 | 100 | 0 |
| 2 | 200 | 100 | 0 |
| 3 | 200 | 100 | 0 |
| 4 | 200 | 100 | 0 |
| 5 | 200 | 100 | 0 |
| 6 | 200 | 100 | 0 |
| 7 | 200 | 100 | 0 |
| 8 | 200 | 100 | 0 |
| 9 | 200 | 100 | 0 |
| 10 | 200 | 100 | 0 |
| 11 | 200 | 100 | 0 |
| 12 | 200 | 100 | 0 |
| 13 | 200 | 100 | 0 |
| 14 | 200 | 100 | 0 |
| 15 | 200 | 100 | 0 |
| 16 | 200 | 100 | 0 |
| 17 | 200 | 100 | 0 |
| 18 | 200 | 100 | 0 |
| 19 | 200 | 100 | 0 |
| 20 | 200 | 100 | 0 |

Table 5 (Cont'd)

| Compound No. | Concentration of spray (ppm) | Control value (%) | Phytotoxicity |
|---|---|---|---|
| 21 | 200 | 100 | 0 |
| 22 | 200 | 100 | 0 |
| 23 | 200 | 100 | 0 |
| 24 | 200 | 100 | 0 |
| 25 | 200 | 100 | 0 |
| 26 | 200 | 100 | 0 |
| 27 | 200 | 100 | 0 |
| 28 | 200 | 100 | 0 |
| 29 | 200 | 100 | 0 |
| 30 | 200 | 100 | 0 |
| 31 | 200 | 100 | 0 |
| 32 | 200 | 100 | 0 |
| 33 | 200 | 100 | 0 |
| 34 | 200 | 100 | 0 |
| 35 | 200 | 100 | 0 |
| 36 | 200 | 100 | 0 |
| 37 | 200 | 100 | 0 |
| 38 | 200 | 100 | 0 |
| 39 | 200 | 100 | 0 |
| 40 | 200 | 100 | 0 |

Table 5 (Cont'd)

| Compound No. | Concentration of spray (ppm) | Control value (%) | Phytotoxicity |
|---|---|---|---|
| 41 | 200 | 100 | 0 |
| 42 | 200 | 100 | 0 |
| 43 | 200 | 100 | 0 |
| 44 | 200 | 100 | 0 |
| 45 | 200 | 100 | 0 |
| 46 | 200 | 100 | 0 |
| 47 | 200 | 100 | 0 |
| 48 | 200 | 100 | 0 |
| 49 | 200 | 100 | 0 |
| 50 | 200 | 100 | 0 |
| 51 | 200 | 100 | 0 |
| 52 | 200 | 100 | 0 |
| 53 | 200 | 100 | 0 |
| 54 | 200 | 100 | 0 |
| 55 | 200 | 100 | 0 |
| 56 | 200 | 100 | 0 |
| 57 | 200 | 100 | 0 |
| 58 | 200 | 100 | 0 |
| 59 | 200 | 100 | 0 |
| 60 | 200 | 100 | 0 |

Table 5 (Cont'd)

| Compound No. | Concentration of spray (ppm) | Control value (%) | Phytotoxicity |
|---|---|---|---|
| 61 | 200 | 100 | 0 |
| 62 | 200 | 100 | 0 |
| 63 | 200 | 100 | 0 |
| 64 | 200 | 100 | 0 |
| 65 | 200 | 100 | 0 |
| 66 | 200 | 100 | 0 |
| 67 | 200 | 100 | 0 |
| 68 | 200 | 100 | 0 |
| 69 | 200 | 100 | 0 |
| 70 | 200 | 100 | 0 |
| 71 | 200 | 100 | 0 |
| 72 | 200 | 100 | 0 |
| 73 | 200 | 100 | 0 |
| 74 | 200 | 100 | 0 |
| 75 | 200 | 100 | 0 |
| 76 | 200 | 100 | 0 |
| 77 | 200 | 100 | 0 |
| 78 | 200 | 100 | 0 |
| 79 | 200 | 100 | 0 |
| 80 | 200 | 100 | 0 |

Table 5 (Cont'd)

| Compound No. | | Concentration of spray (ppm) | Control value (%) | Phytotoxicity |
|---|---|---|---|---|
| 81 | | 200 | 100 | 0 |
| 82 | | 200 | 100 | 0 |
| 83 | | 200 | 100 | 0 |
| Compara. compound | A | 200 | 0 | 2 |
| 〃 | B | 200 | 0 | 1 |
| 〃 | C | 200 | 0 | 2 |
| 〃 | D | 200 | 0 | 1 |
| 〃 | E | 200 | 0 | 2 |
| 〃 | I | 200 | 75 | 0 |

Comparative compound I: 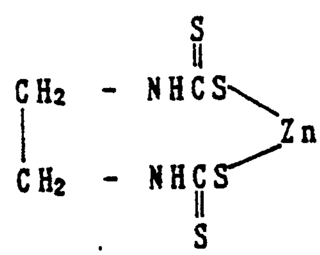

(Commercially available as "Zineb")

Test Example 5 Test for the control effect on cucumber downy mildew

Over the first-leaf stage young seedlings of cucumber (variety: Sagami hanjiro) soil-cultured in a porcelain pot of 9 cm in diameter in a greenhouse was sprayed on the both surfaces of leaves at 10 ml per pot of a test liquid which was prepared by diluting a wettable powder prepared according to Example 12 to a predetermined concentration. One day after the spraying of the test liquid, the lower surface of the sprayed leaf was inoculated by atomizing with a spore suspension [20-30 spores under one view of microscope(x 150)] of cucumber downy mildew fungus (Pseudo-peronospora cubensis) which was prepared by washing down from previously sporulated lesions on cucumber leaves in moist chamber, in a deionized water to which 50 ppm of Tween 20® had been added. After inoculation, the seedlings were kept once in

the moist chamber at 20°C for 24 hours, and then housed within the greenhouse at 24°C to stimulate an incidence. Six days after inoculation, the seedlings were taken out to investigate the area of lesions per leaf and the control value (%) was calculated on the basis of the following equation. The test was conducted in three-series of pots for each test compound and the average control value (%) was calculated.

Furthermore, the phytotoxity against cucumber was assessed and indicated on the same ratings as described in Test Example 1. The results are shown in Table 6.

$$\text{Control value (\%)} = \left(1 - \frac{\text{Area of lesions per leaf in treated plot}}{\text{Area of lesions per leaf in untreated plot}}\right) \times 100$$

Table 6

| Control effect on cucumber downy mildew | | | |
|---|---|---|---|
| Compound No. | Concentration of spray(ppm) | Control value(%) | Phytotoxicity |
| 1 | 200 | 100 | 0 |
| 2 | 200 | 100 | 0 |
| 3 | 200 | 100 | 0 |
| 4 | 200 | 100 | 0 |
| 5 | 200 | 100 | 0 |
| 6 | 200 | 100 | 0 |
| 7 | 200 | 100 | 0 |
| 8 | 200 | 100 | 0 |
| 9 | 200 | 100 | 0 |
| 10 | 200 | 100 | 0 |
| 11 | 200 | 100 | 0 |
| 12 | 200 | 100 | 0 |
| 13 | 200 | 100 | 0 |
| 14 | 200 | 100 | 0 |
| 15 | 200 | 100 | 0 |
| 16 | 200 | 100 | 0 |
| 17 | 200 | 100 | 0 |
| 18 | 200 | 100 | 0 |
| 19 | 200 | 100 | 0 |
| 20 | 200 | 100 | 0 |

Table 6 (Cont'd)

| Compound No. | Concentration of spray(ppm) | Control value(%) | Phytotoxicity |
|---|---|---|---|
| 21 | 200 | 100 | 0 |
| 22 | 200 | 100 | 0 |
| 23 | 200 | 100 | 0 |
| 24 | 200 | 100 | 0 |
| 25 | 200 | 100 | 0 |
| 26 | 200 | 100 | 0 |
| 27 | 200 | 100 | 0 |
| 28 | 200 | 100 | 0 |
| 29 | 200 | 100 | 0 |
| 30 | 200 | 100 | 0 |
| 31 | 200 | 100 | 0 |
| 32 | 200 | 100 | 0 |
| 33 | 200 | 100 | 0 |
| 34 | 200 | 100 | 0 |
| 35 | 200 | 100 | 0 |
| 36 | 200 | 100 | 0 |
| 37 | 200 | 100 | 0 |
| 38 | 200 | 100 | 0 |
| 39 | 200 | 100 | 0 |
| 40 | 200 | 100 | 0 |

Table 6 (Cont'd)

| Compound No. | Concentration of spray(ppm) | Control value(%) | Phytotoxicity |
|---|---|---|---|
| 41 | 200 | 100 | 0 |
| 42 | 200 | 100 | 0 |
| 43 | 200 | 100 | 0 |
| 44 | 200 | 100 | 0 |
| 45 | 200 | 100 | 0 |
| 46 | 200 | 100 | 0 |
| 47 | 200 | 100 | 0 |
| 48 | 200 | 100 | 0 |
| 49 | 200 | 100 | 0 |
| 50 | 200 | 100 | 0 |
| 51 | 200 | 100 | 0 |
| 52 | 200 | 100 | 0 |
| 53 | 200 | 100 | 0 |
| 54 | 200 | 100 | 0 |
| 55 | 200 | 100 | 0 |
| 56 | 200 | 100 | 0 |
| 57 | 200 | 100 | 0 |
| 58 | 200 | 100 | 0 |
| 59 | 200 | 100 | 0 |
| 60 | 200 | 100 | 0 |

Table 6 (Cont'd)

| Compound No. | Concentration of spray(ppm) | Control value(%) | Phytotoxicity |
|---|---|---|---|
| 61 | 200 | 100 | 0 |
| 62 | 200 | 100 | 0 |
| 63 | 200 | 100 | 0 |
| 64 | 200 | 100 | 0 |
| 65 | 200 | 100 | 0 |
| 66 | 200 | 100 | 0 |
| 67 | 200 | 100 | 0 |
| 68 | 200 | 100 | 0 |
| 69 | 200 | 100 | 0 |
| 70 | 200 | 100 | 0 |
| 71 | 200 | 100 | 0 |
| 72 | 200 | 100 | 0 |
| 73 | 200 | 100 | 0 |
| 74 | 200 | 100 | 0 |
| 75 | 200 | 100 | 0 |
| 76 | 200 | 100 | 0 |
| 77 | 200 | 100 | 0 |
| 78 | 200 | 100 | 0 |
| 79 | 200 | 100 | 0 |
| 80 | 200 | 100 | 0 |

Table 6 (Cont'd)

| Compound No. | Concentration of spray(ppm) | Control value(%) | Phytotoxicity |
|---|---|---|---|
| 81 | 200 | 100 | 0 |
| 82 | 200 | 100 | 0 |
| 83 | 200 | 100 | 0 |
| Compara. compound A | 200 | 0 | 3 |
| " B | 200 | 0 | 2 |
| " C | 200 | 0 | 3 |
| " D | 200 | 0 | 2 |
| " E | 200 | 0 | 3 |
| " I | 200 | 85 | 0 |

## Claims

1. A benzenesulfonanilide derivative of formula (I)

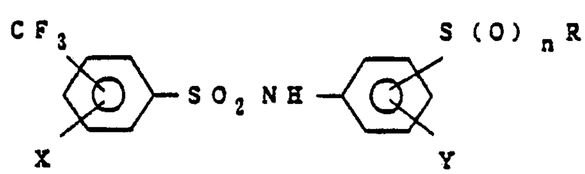

(I)

wherein R represents ($C_1$-$C_6$)-alkyl, ($C_2$-$C_6$)-alkenyl, ($C_2$-$C_6$)-alkynyl, ($C_1$-$C_6$)-haloalkyl, ($C_1$-$C_6$)-alkoxy-($C_1$-

$C_6$)-alkyl, ($C_1$-$C_6$)-alkoxycarbonyl-($C_1$-$C_6$)-alkyl, ($C_3$-$C_6$)-cycloalkyl, ($C_3$-$C_6$)-cycloalkyl-($C_1$-$C_6$)-alkyl, phenyl or phenyl-($C_1$-$C_6$)-alkyl, n is 0, 1 or 2, X represents hydrogen or halogen and Y represents hydrogen, halogen, nitro, ($C_1$-$C_6$)-alkylthio, ($C_1$-$C_6$)-alkylsulfinyl or ($C_1$-$C_6$)-alkylsulfonyl.

2. A benzenesulfonanilide derivative of claim 1 wherein X is hydrogen, Y is halogen, n is 0 and R is ($C_1$-$C_6$)-alkyl, ($C_2$-$C_6$)-alkenyl, ($C_2$-$C_6$)-alkynyl, ($C_1$-$C_6$)-haloalkyl, ($C_1$-$C_6$)-alkoxy-($C_1$-$C_6$)-alkyl, ($C_1$-$C_6$)-alkoxyca rbonyl-($C_1$-$C_6$)-alkyl, ($C_3$-$C_6$)-cycloalkyl, ($C_3$-$C_6$)-cycloalkyl-($C_1$-$C_6$)-alkyl, phenyl or phenyl-($C_1$-$C_6$)-alkyl.

3. A benzenesulfonanilide derivative of claim 1 wherein X is halogen, Y is hydrogen, n is 0 and R is ($C_1$-$C_6$)-alkyl, ($C_2$-$C_6$)-alkenyl, ($C_2$-$C_6$)-alkynyl, ($C_1$-$C_6$)-haloalkyl, ($C_1$-$C_6$)-alkoxy-($C_1$-$C_6$)-alkyl, ($C_1$-$C_6$)-alkoxyca rbonyl-($C_1$-$C_6$)-alkyl, ($C_3$-$C_6$)-cycloalkyl, ($C_3$-$C_6$)-cycloalkyl-($C_1$-$C_6$)-alkyl, phenyl or phenyl-($C_1$-$C_6$)-alkyl.

4. A benzenesulfonanilide derivative of claim 1 wherein X is hydrogen, Y is nitro, ($C_1$-$C_6$)-alkylthio, ($C_1$-$C_6$)-alkylsulfinyl or ($C_1$-$C_6$)-alkylsulfonyl, n is 0 and R is ($C_1$-$C_6$)-alkyl, ($C_2$-$C_6$)-alkenyl, ($C_2$-$C_6$)-alkynyl, ($C_1$-$C_6$)-haloalkyl, ($C_1$-$C_6$)-alkoxy-($C_1$-$C_6$)-alkyl, ($C_1$-$C_6$)-alkoxycarbonyl-($C_1$-$C_6$)-alkyl, ($C_3$-$C_6$)-cycloalkyl, ($C_3$-$C_6$)-cycloalkyl-($C_1$-$C_6$)-alkyl, phenyl or phenyl-($C_1$-$C_6$)-alkyl.

5. A benzenesulfonanilide derivative of claim 1 wherein X is hydrogen, Y is hydrogen, n is 1 and R is ($C_1$-$C_6$)-alkyl.

6. A benzenesulfonanilide derivative of claim 1 wherein X is halogen, Y is hydrogen, n is 1 and R is ($C_1$-$C_6$)-alkyl.

7. A benzenesulfonanilide derivative of claim 1 wherein X is hydrogen, Y is halogen, n is 1 and R is ($C_1$-$C_6$)-alkyl.

8. A benzenesulfonanilide derivative of claim 1 wherein X is hydrogen, Y is hydrogen, n is 2 and R is-($C_1$-$C_6$)-alkyl, ($C_2$-$C_6$)-alkenyl, ($C_2$-$C_6$)-alkynyl, ($C_1$-$C_6$)-haloalkyl, ($C_1$-$C_6$)-alkoxy-($C_1$-$C_6$)-alkyl, ($C_1$-$C_6$)-alkoxycarbonyl-($C_1$-$C_6$)-alkyl, ($C_3$-$C_6$)-cycloalkyl, ($C_3$-$C_6$)-cycloalkyl-($C_1$-$C_6$)-alkyl, phenyl or phenyl-($C_1$-$C_6$)-alkyl.

9. A benzenesulfonanilide derivative of claim 1 wherein X is halogen, Y is hydrogen, n is 2 and R is ($C_1$-$C_6$)-alkyl, ($C_3$-$C_6$)-cycloalkyl, phenyl or phenyl-($C_1$-$C_6$)-alkyl.

10. A benzenesulfonanilide derivative of claim 1 wherein X is hydrogen, Y is halogen, nitro or ($C_1$-$C_6$)-alkylsulfonyl, n is 2 and R is ($C_1$-$C_6$)-alkyl.

11. A fungicide for agriculture and horticulture, comprising an active ingredient and inert carrier characterised by containing as its active ingredient a benzenesulfonanilide derivative according to any one of the preceding claims.